(19) Europäisches Patentamt

European Patent Office

Office européen des brevets

(11) **EP 1 593 872 A1**

(12) **EUROPEAN PATENT APPLICATION**

(43) Date of publication:
**09.11.2005 Bulletin 2005/45**

(51) Int Cl.⁷: **F16F 7/12**, B60R 21/04

(21) Application number: **04381011.8**

(22) Date of filing: **06.05.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **GRUPO ANTOLIN-INGENIERIA, S.A.**
**09007 Burgos (ES)**

(72) Inventors:
• **Campo Barasoain, Pedro**
**09007 Burgos (ES)**

• **Santamaria Sanchez, Alberto**
**09007 Busgos (ES)**

(74) Representative:
**Esteban Perez-Serrano, Maria Isabel et al**
**UDAPI & ASOCIADOS**
**Explanada, 8**
**28040 Madrid (ES)**

Remarks:
Amended claims in accordance with Rule 86 (2) EPC.

(54) **Shock absorber and manufacturing procedure thereof**

(57) The present invention relates to an energy absorbing element intended to absorb the impact energy on vehicle doors constituted by a structure in hollow prismatic cells delimited by two bases parallel to their longitudinal axes, manufactured by extrusion, which results in a continuous piece from which by means of cutting the energy absorption element is obtained with a projection adapted to the form of the area to be protected.

The disposition of the hollow prismatic cells is transversal to the direction of the force of the impact resulting in an energy absorption behaviour very close to optimal. The use of foams is also envisaged which allow the response curve of the absorbing element to be adapted without requiring the use of different extrusion dies.

**EP 1 593 872 A1**

**Description**

## OBJECT OF THE INVENTION.

The present invention relates to an energy absorbing element intended to absorb the energy of impact on vehicle doors and to the manufacturing procedure thereof.

This invention is characterised in the use of a structure of prismatic cells limited by two bases parallel to their longitudinal axes which can be constituted by walls integrated in the absorbing element, manufactured by extrusion, which results in a continuous piece from which by means of cutting the energy absorption element is obtained with a projection adapted to the form of the area to be protected.

The energy absorbing element according to this invention is intended to be housed in cavities in vehicle doors respecting the restrictions required in this type of application.

The disposition of the prismatic cells is transversal to the direction of the force of the impact resulting in a very nearly optimal energy absorption behaviour.

The same invention envisages the use of foams which allow the values to be adjusted of the force with which the absorbing element opposes the impact force without substantially modifying the mode of behaviour and without requiring the use of several extrusion dies.

## BACKGROUND OF THE INVENTION.

One of the most important problems in the design of vehicles is that of safety and in particular the protection of the occupants in the event of impact.

The impact can be interpreted, from the purely physical point of view, as the application of external forces of very high amplitude acting mainly on localised areas of the bodywork. The deformation and even the rupture of the bodywork through the application of these forces results in possible injury to the occupants through the invasion of their space and through the transmission of the forces of external origin, injuries which have to be minimized insofar as it is possible.

Consider the case of a mass impacting on the bodywork and more specifically on the door of the vehicle. During the impact, the mass gives up all its kinetic energy which is transformed mainly into work of deformation and into heat. The deformation will take place both in the impacting mass and in that which receives the impact. To achieve that the impacting mass does not damage the interior of the vehicle it is necessary that a force exceeding a certain value taken as maximum is not transmitted to the innermost structure, that which will serve as base for the element absorbing the impact energy.

This condition will be respected in a greater measure if the energy absorbing element is capable of absorbing and dissipating as much energy as possible; and the absorption takes place in a controlled manner.

Various energy absorbing devices are known with this objective, intended to suffer deformation and destruction of the structure which constitutes them. As already mentioned, the force which is transmitted must not exceed a certain pre-established value since, if it is exceeded, at that place the base securing the energy absorption element is fastened would be transmitting a force which would be greater than the maximum tolerated by the occupant that is going to receive said force.

One of the solutions commonly employed consists in using pieces of plastic constituted by a base on which there is a plurality of cones pointed with their main axis parallel to the direction of the impact force. An example of this solution is described in the French Patent with publication number FR2784151. The number, height and distribution of the cones on their base need not be regular being instead determined to achieve a behaviour close to that established in the design criteria.

The Patent with publication number US4352484 describes another type of energy absorption element based on the construction of a stack of layers formed by honeycomb cell structures. These layers are superimposed, the walls of one layer not necessarily being coincident with the next. However each one of these layers respects that the prismatic bodies which form the honeycomb structure have their axes aligned with the direction of application of the impact force. In this same patent the use is described of polyurethane foams to fill the cells increasing the energy absorption capacity.

A foam filling can occupy the entirety of the interior volume of the cell or not, as disclosed in the European patent with publication number EP0744281. In the invention which the patent document describes, use is made of a base with a honeycomb structure with the main axes aligned with the direction of impact. In the end of the prismatic bodies which form the honeycomb structure the foam is incorporated filling part of the interior volume thereof. In this case the foam is used additionally as a noise absorption medium.

The patents with publication number US6245408 and US6472043 are examples of inventions which modify the characteristics of each cell by including openings. The application of the force is likewise in the direction parallel to that of the main axes of the prismatic bodies which form the cells. The crushing of the walls takes place in a controlled manner through the presence of openings which establish localised points of force concentration.

As well as these types of structure intended for energy absorption, there are special foams and the conventional foams.

The conventional foams have a behaviour such that the force transmitted to the supporting element is always increasing and, therefore, they are unsuitable for impacts with high energy levels. The advantage which they offer is simplicity in their manufacture and emplacement.

On the other hand, the special foams have the behaviour of collapsible structures and are manufactured like conventional foams. Their materials are special compositions prepared in a laboratory. They are used in aerospace technology for which reason their cost is very high and their availability on the market is limited.

In all the collapsible structures mentioned the direction of the force is parallel to the axes of the prismatic bodies which form the cells and they have behaviour curves which in the majority of cases are removed from the theoretical curve which optimises the degree of energy absorption; and if the curve obtained is good, as is the case of the absorbers with cone type elements, they have other serious drawbacks such as being a discontinuous medium and their behaviour depends on the area where the impact is received, and that they are manufactured by injection and any change implies a change of manufacturing tool, the changes in the tools being very expensive with respect to other technologies for transformation of plastic.

The present invention establishes a working mode of the cylindrical bodies of constant cross-section employed in the stack which constitutes the deformable core or structure, and in particular prismatic when the cross-section used is polygonal, different to those known in the state of the art, as well as being formed by an extruded element that can be cut a posteriori to the most suitable shape.

This same invention also allows the modification, mainly by scaling, of the response properties through the inclusion of foams avoiding for example the use of multiple extrusion dies.

## DESCRIPTION OF THE INVENTION.

The present invention relates to an energy absorbing element intended to be installed in door cavities to absorb the energy of a lateral impact as well as to the manufacturing procedure of the same.

The elements for absorption of impact energy are installed in the door cavity in such a way that they are secured by a base to the unseen face of the door trim and face with the other base, resting or not thereon, the unseen face of the door.

The absorption element is the piece which serves to oppose the force transmitted by the structure of the door. The force with which it is opposed, by the principle of action and reaction, will be the force which it transmits to its base. This force ought not to surpass the tolerable limits for the occupant.

The force which is transmitted depends on each instant since the deformation involves a sequence of configurations which result in the progressive crushing of the energy absorption element.

In the study of the deformation of the energy absorption element it is convenient to consider as the variable independent of the force, the value of the displacement d instead of the time variable t. If we express the force $\mathbf{F}$ applied on the absorption element as $\mathbf{F}(d)$, then from the value of the integral

$$\mathbf{E} = \int_{0}^{d_{max}} \mathbf{F}(d)\,\delta d$$

the value of the absorbed energy is found, where $d_{max}$ is the value of the maximum displacement. The representation of $\mathbf{F}(d)$ versus d, allows the area under the curve thereof to be interpreted as the energy absorbed during the deformation under the action of $\mathbf{F}(d)$.

Actually, in the impact, once the maximum displacement has been reached, a certain degree of elastic recovery is possible.

This elastic deformation can be represented by means of a continuation of the curve backwards (always with much smaller values of the force) resulting in a curve with hysteresis. In practical terms this recovery behaviour can be considered as a second curve in which the energy associated with the area under it is interpreted as energy not dissipated but instead accumulated elastically.

It is desirable that the area associated with this last segment be as small as possible.

The fact that the force $\mathbf{F}(d)$ has to be limited by a maximum value, $\mathbf{F}_{max}$, implies establishing a horizontal line on the graph, under which the curve F(d) should remain at all times. As a consequence, the ideal absorbing element will be that whose behaviour curve adapts as closely as possible to the value of $F_{max}$ optimising the area to be covered.

This maximising of the area or of the energy to be absorbed without surpassing the maximum value of the force to be transmitted occurs when:

o   The response to the impact force is produced as soon as possible resulting in a pronounced initial gradient,

o   When a value close to maximum is reached, it is held constant and fits the maximum value curve (usually termed the "plateau" value),

o   When the greatest deformation has been reached, there is no elastic recovery.

The absorbing element successfully satisfies these requirements by making use of two planar bases between which is to be found a structure configured by regular stacking of hollow cylindrical bodies of constant cross-section, polyhedral or not. In the event that the hollow cylindrical bodies are of polygonal cross-section, they can be termed in the course of the description, prismatic bodies.

Throughout this specification, a base of the absorbing element has to be interpreted as the geometric location constituted by a plane which serves as foundation or main support of the core formed by the stacking of hollow cylindrical bodies. This plane, as a geometric entity, can be tangential to all the cylindrical bodies which constitute the support, or a secant to all or some of them according to the pattern used in the stacking.

One or two of these bases can be formed by planar physical walls which are part of the absorbing element and therefore extruded with the rest of the internal walls which constitute each of the cylindrical bodies of the core. By way of example, one has the honeycomb structure with prismatic bodies of hexagonal polyhedral cross-section, or a stack of cylindrical bodies of circular or elliptic cross-section among which of course will be other cavities or voids of neither circular nor elliptic cross-section.

The bases are on one and the other side of the element and they are parallel to the main axes of the cylindrical bodies which constitute the core. One of the bases is that which rests against the support and the other base is that which receives the impact compressing the core which is situated between the two.

With this configuration the impact force is applied perpendicularly to the external base and therefore perpendicularly to the axes of the cylindrical bodies.

This configuration is obtained by extrusion obtaining a continuous piece from which the energy absorption elements are obtained by means of cutting. The cut can be perpendicular or oblique, for example to exclude some surface which defines the cavity wherein it is installed.

Cutting procedures suitable for these cases are cutting by means of a die, cutting by laser, and cutting by means of high pressure water jet.

The response curves obtained on this configuration are close to the ideal curve: a quick rise of the absorbed force level, constant until the element has collapsed and with an absence of peaks in this constant segment which allows close-fitting to the maximum value given the absence of significant fluctuations.

The final force transmitted on the supporting base is independent of the area where the force is applied due to its continuous configuration. The same does not happen in cone structures which have the drawback being variable in behaviour depending on the point where the force is applied, due to their discontinuous configuration.

This aspect is important since a given vehicle model can have different heights according to the version through modification to the vehicle suspension. The same absorption element of the type with cones will have characteristics differing from one vehicle model to another. This does not happen with the absorbing element of the present invention due to the aforementioned continuity.

This result is also important for the influence of the configuration of the sides on the distribution of pressure on the support. Since a point force tends to result in a homogeneous distribution of pressure highly independent of the point of support, the presence of sides with oblique planes does not produce a concentration of forces, whereby non-perpendicular side configurations have a small and limited influence on the general behaviour of the energy absorbing element.

To obtain an energy absorbing element which responds with a higher characteristic curve, and therefore with a greater area underneath, which means a greater energy absorption, it will be sufficient to use extrusion dies which result in thicker walls. This option, although possible, requires the use of different dies for different strength requirements with the very high cost this implies.

The present invention overcomes this drawback by allowing the height of the response curve to be adjusted on the same structure by filling some of the cells with foam.

The presence of foam inside the cells stabilizes the cell walls locally against buckling so that a slight lateral support like that offered by the foam substantially increases the overall response of the honeycomb structure.

Compared with the walls of the honeycomb structure, the resistive capacity of the foams is negligible; however, as their function is that of stabilizing the walls, the use of foams of different densities allows the overall response of the energy absorption element to be modified substantially.

The density of the foam is not the only variable which allows scaling of the graph of the response curve of the absorbing element, instead partial filling changing the configuration patterns of the filled cells also allows these changes.

When it is said that the graph of the curve is scaled it is understood that there are other smaller changes which do not respond to a simple scaling ratio, but these changes are quantitatively negligible with respect to the overall behaviour.

The optimised behaviour obtained with this configuration of the absorbing element as well as the possibility of modifying the characteristics of the curve in a controlled and predictable way is due to a rigorous selection process among various possible cases on which a numerical simulation has been carried out combined with experimental trials. These experimental cases are those which will be explained by way of example in the section wherein the invention is described in detail.

## DESCRIPTION OF THE DRAWINGS.

The present descriptive specification is completed with a set of drawings, which illustrate but in no way restrict the preferred embodiment of the invention.

Figure 1 shows a set of core configurations of impact energy absorbing elements according to different configurations with and without walls on different faces. On these configurations a set of forces is represented referenced by means of an index. The arrow associated with each external force applied to the core serves to indicate the direction of the force and the application conditions in each of the graphs shown as from figure 3.

Figure 2 shows a graph of the typical behaviour of an embodiment of the invention obtained by numerical simulation. On the same graph the ideal behaviour is compared with that obtained in the result of the experiment carried out.

Figure 3 shows the behaviour graph of an absorbing element core with axial impact and with transversal impact to the main axis of the cylindrical bodies to show the greater amplitude of the first with respect to the second. As from this figure all the results shown correspond to forces applied transversally to the axes of the cylindrical bodies which constitute the core of the energy absorbing element and with the same scale on both axes.

Figure 4 shows the behaviour graph of an energy absorbing element without upper and lower walls.

Figure 5 shows the behaviour graph of energy absorbing elements different to those which have had side walls incorporated in addition to the walls of the upper and lower bases.

Figure 6 shows the behaviour graph of an absorbing element with a single wall on the lower base.

Figure 7 shows the graph of an embodiment of the invention demonstrating the design criteria imposed.

Figure 8 shows the behaviour graph of an absorbing element of an embodiment of the invention compared with the curve obtained in the same absorbing element with partial filling of part of its cells.

Figure 9 shows an energy absorbing element with the cells empty and three more examples with different ways of filling the cells with foam.

## DETAILED EXPLANATION OF THE INVENTION.

The invention consists of an impact energy absorbing element intended to be installed in the door cavity of a vehicle and of the manufacturing procedure which allows it to be obtained.

There are important design restrictions for this type of device since its function is that of impeding the forces due to an impact on the external face of the door from being transmitted above a certain value to the interior face and producing harm or injury to the occupant.

Since the space where it is housed is limited in width, the energy absorbing capacity is also limited. The justification for this statement is the following:

In the description of the invention the value of the absorbed energy has been determined as the work carried out by the force applied to the energy absorption element and calculable by integration from the value 0 taken as reference up to the value of the maximum displacement ($d_{max}$). The absorbed energy is therefore limited by the maximum displacement which can never be greater than that of the width of the energy absorbing element which is compressed. Moreover, the value of the function $\mathbf{F}(d)$ which corresponds at all times to the force of the deformation is a value delimited by $F_{max}$, the maximum value to be transmitted, which must not surpass the force tolerated by the occupant without causing him or her harm or injury.

With these two limitations, on the function and on the integration interval, it is determined that the maximum energy to be absorbed with an ideal energy absorption element would be equal to the product $F_{max}.d_{max}$.

This product corresponds to the area of the rectangle which is defined in a graph of $\mathbf{F}(d)$ versus d by the horizontal line determined by $F_{max}$ extended up to the value $d_{max}$.

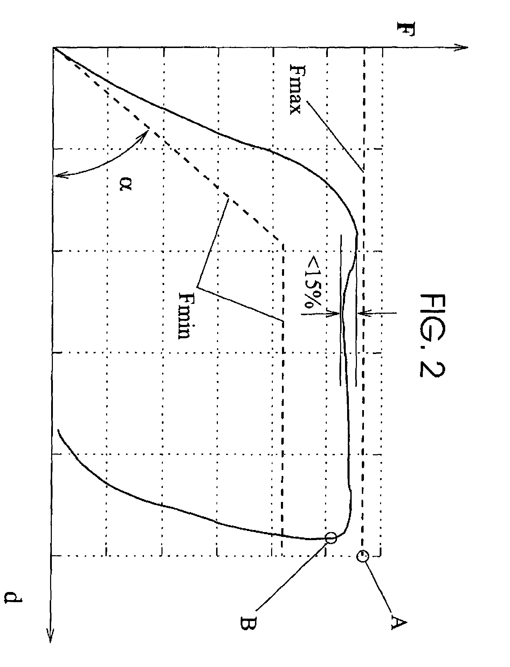

In figure 2 this line is identified and finishes in point (A) corresponding to the coordinates (Fmax.dmax).

Additional restrictions exist on the design of energy absorption elements.

When the deformation by impact begins, the energy absorbing element has to respond with an opposing force which quickly approaches the maximum value, being as close as possible to a vertical line. This behaviour is materialized with an initial segment of the behaviour curve having a high gradient and more than a certain value ($\alpha$).

When this high value of the force has been reached, the absorbing element must be able to maintain it constant until the end and with little fluctuation. On the same graph a maximum fluctuation range of 15% has been indicated.

When the maximum deformation has been reached, point (B), there is a certain elastic recovery which results in a final segment of the curve which extends backwards.

The area lying under this last segment of the curve, starting from (B), is the energy which has not been dedicated to the work of deformation nor has it been dissipated in the form of heat but instead it has been stored elastically. This area has to be minimal.

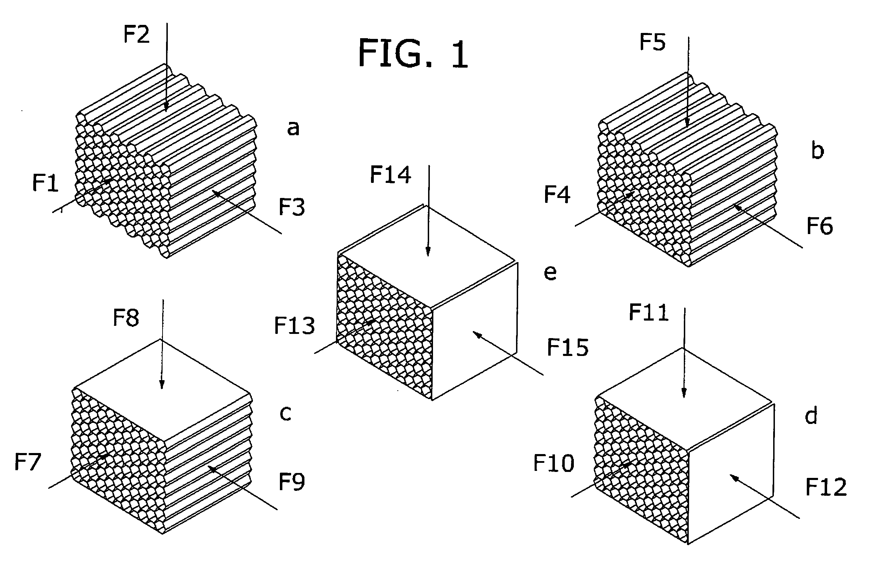

With the objective of obtaining the energy absorbing element which best adapts to the aforesaid requirements, various experiments have been carried with the configurations which are shown in figure 1 and which are identified with a small letter. In these same configurations the forces Fi are represented, where i=1,..., 15, which correspond to 15 different experiments, one with each of the forces acting by itself.

In brief, the configurations can be listed which correspond to each reference letter of figure 1:

a. Core without walls formed by stacking cylindrical bodies of hexagonal polyhedral cross-section.

b. The same configuration as in (a) above but including a wall on the lower base.

c. Honeycomb core with cylindrical bodies of hexagonal polyhedral cross-section and with a wall on the upper base and on the lower for support.

d. Configuration similar to (c) above to which an additional wall has been added, likewise forming part of the absorbing element, on the righthand side.

e. Configuration similar to (c) to which two additional walls have been added, forming part of the absorbing element.

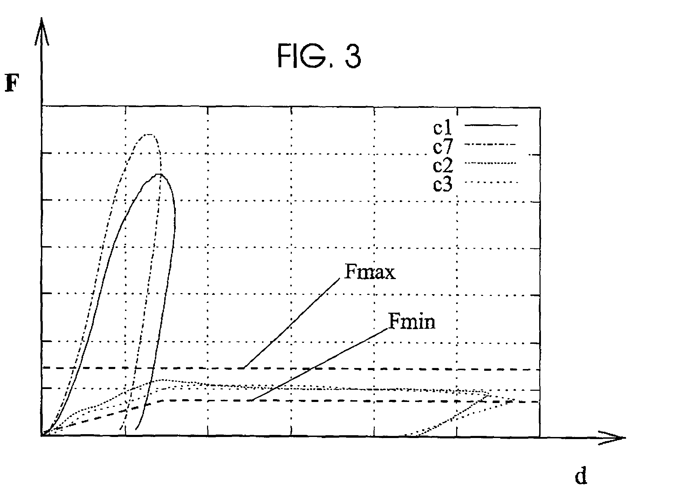

The graphs of figures 3, 4, 5, 6, and 7 show the results obtained. Only the most representative have been included, the cases in which the results are similar to those presented have not been shown as explained later below. In each of the graphs a legend appears in the form ci, where "i" is a reference which indicates the number of the experiment consisting in applying the force Fi on the element corresponding to it shown in figure 1.

In all the graphs, except in figure 3, the same scale has been used for both abscissae and ordinates.

Figure 3 is noteworthy in that in a first experiment tests were conducted with forces coinciding with the axial direction, that is, parallel to the axes of the cylindrical bodies which the core has. The same graph includes the response curves with tests carried out with transversal forces to compare the differences in behaviour.

The curves in relation with an impact in the axial direction (c1, c7), although they have a very high initial gradient, when the maximum value is reached are unable to maintain the transmitted force and collapse on reaching displacement values much shorter than that offered by the curves in relation with an impact (c2, c3) transversal to the main axis of the cylindrical bodies. The value of the area can be large only through the very high value of the force that can be reached; however, since the criterion imposed by $F_{max}$ is less, by truncating the graph it is demonstrated that this type of device is unsuitable and its behaviour is far from ideal.

In this graph the curves c4, c10 and c13 have not been shown because they are similar and they vary in the same range as c1 and c7, and therefore the same conclusions serve as for these last cases.

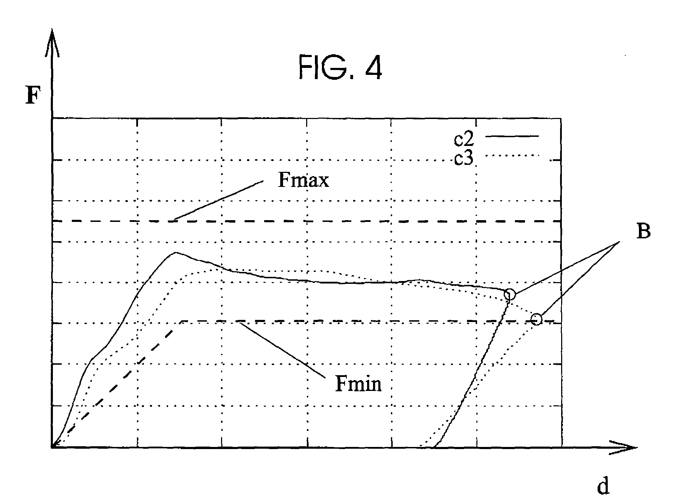

Starting from figure 4, graphs are shown which correspond in any case to experiments with forces transversal to the main axis of the prismatic bodies which constitute the core of the absorbing element. In this figure 4 an energy absorbing element is considered according to the present invention consisting of the core with honeycomb structure constituted by stacking prismatic bodies between two bases, one above and another below. Walls are not included on the upper and lower bases, nor on the sides.

In figure 4 separately represented are curves c2 and c3 which had already been represented in figure 3 in order to establish a comparison with the response curves to forces applied in the direction of the main axis of the prismatic bodies. Curve c2 is an acceptable curve in the sense that it satisfies the required criteria: it is enclosed between $F_{max}$ and $F_{min}$, with fluctuations less than 15% in the plateau values, it has a high initial gradient and the behaviour associated with hysteresis is reduced.

Curve c3 is very similar in behaviour to curve c2 since the differences are in the stacking directions and the support on the bases, since these take place on vertices instead of on faces of the hexagons.

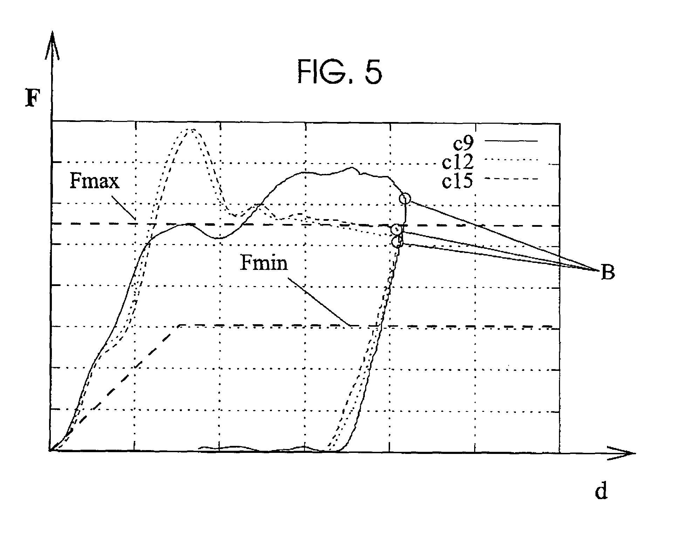

In the graph of figure 5 the curves are included obtained in experiments carried out with the application of the forces **F**i i=9,12,15 on one side.

In the case c9, the energy absorbing element has two walls, one on the upper base and another on the lower base. These walls are planes which are part of the energy absorbing element so that the latter is not only a plane for application of the force. It is sufficient to observe the cells adjacent to the plane of any of the walls to verify that some cells are complete while in others the plane passes through the middle. These half cells in reality are irregular polygonal cells more resistant to compression since they have fewer degrees of freedom in confronting compression.

This greater rigidity in the faces permits the force to be distributed uniformly throughout the core, the crushing of the latter taking place which results in a behaviour with less fluctuations. This is true when the force is perpendicular to the planes of the bases as in c8; however, when the force is parallel to any of these bases as in c9, these have to be compressed in one direction contained in their own plane. The failure will take place therefore by local buckling and it will come closer to the behaviour carried out by the first experiment since the walls are also parallel to the direction of the force.

The curve corresponding to case c9, when the maximum value was reached and a certain degree of deformation surpassed, again has an increase in the force which implies a severe fluctuation.

In the experiments carried out according to the configuration of cases c12 and c15, in addition to the walls on the main bases, side walls have been incorporated.

Although the bases in case c9 constitute planes parallel to the direction of application of the force, in cases c12 and c15 these planes are supplemented with one (c12) or two (c15) additional walls in the plane of application of the force and on the opposite wall.

These walls would homogenise the tensional state throughout the core since the application of a lateral force with lateral planes can be assimilated to the application above with upper and lower bases; only that in this case there is always at least one plane parallel to the application of the force.

This homogenisation of the force stabilizes the constant value reached after its maximum, but the maximum is reached according to a peak which cannot be maintained and therefore limits the energy absorption capacity.

To complete all the cases contemplated in figure 1, the response curves c11 and c14 should be considered. No graph of these curves has been included since they are similar to the last ones examined which had walls parallel to the direction of the force; nevertheless, the results obtained are commented below.

Curve c14 corresponds to an application of force on an absorbing element with walls on the two bases and also lateral walls. This experiment is analogous to that which corresponds to the application of the force on one side (c15) although it does not have a response curve exactly the same. Since the side wall on which the force is applied which corresponds to experiment c15 is joined by the vertices of the cylindrical bodies of hexagonal cross-section and the upper wall has complete faces of coincident cylindrical bodies of hexagonal cross-section, the response curve c15 is higher and has greater peaks.

The cause is due to the configuration resulting in the incomplete cells adjacent to the walls in both cases. In the side wall where F15 is applied, the incomplete cells are very small and therefore very rigid for which reason the wall acts as if it were very thick but in sections; however, in the wall where F14 is applied, the incomplete cells are half cells (of greater size than the previous ones) affecting a greater volume as if the wall were thicker. This greater volume signifies that the compression through the action of F15 has to overcome a wall arranged in the direction of application of the force with a thicker equivalent thickness resulting in higher values of resistance (response curve c15 higher) and with peaks. The response curve c14 is smoother but with equally excessive variations of the plateau values.

Curve c11, by removing one of the side walls improves its response, but this c11 curve, as well as continuing not to comply with the required criteria, has a substantial final length of elastic recovery possibly due to the asymmetry of its configuration which results in not very adequate deformation.

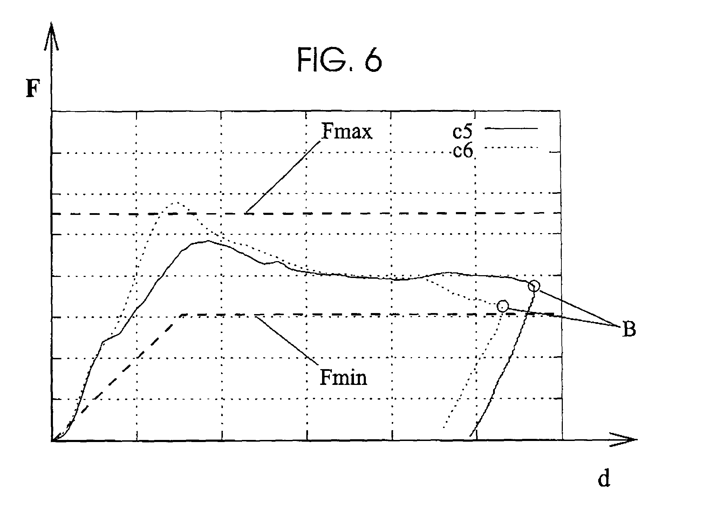

A new experiment has been carried out with a single wall on the lower base and with application of forces on the base with the free face (c5) opposite the wall and on the side (c6). The results are shown in the graph of figure 6.

The curve c6 corresponding to the application of the lateral force has values of the force falling over an excessive range and it is not capable of staying close to the maximum value.

The curve c5 is the response obtained on the basis of an embodiment of the invention consisting of a core constituted by stacking prismatic bodies limited between two bases, wherein the lower base is constituted by a wall integrated in the absorbing element. The opposite one corresponds to the application of a force perpendicular to the upper base opposite to where the wall is located. The curve c5 corrects the fluctuations of the plateau values with respect to the curve c6. This improvement is due to there being no walls parallel to the direction of application of the force.

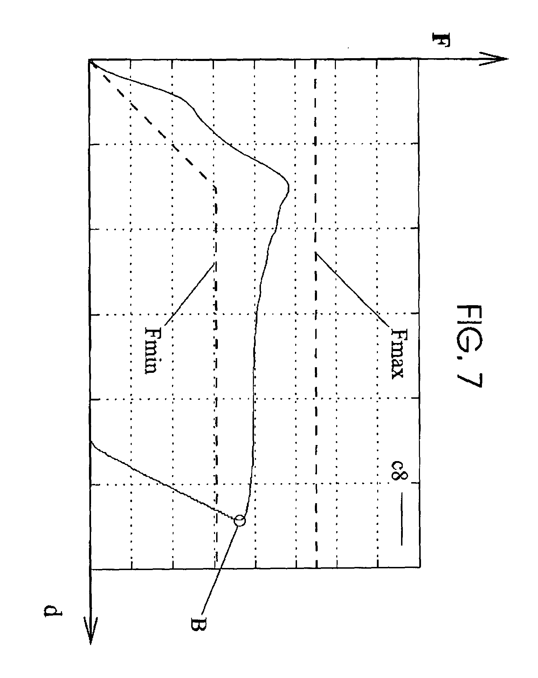

The graph of figure 7 correspond to case 8 and to a configuration resulting from an embodiment of the invention wherein use is made of a honeycomb core as a result of stacking prismatic bodies, with the two bases with walls in opposition and application of the force perpendicular to the planes of the bases, or what amounts to the same, perpendicular to the axes of the prismatic bodies with which the stacking is constituted.

This is the configuration which offers the smallest levels of fluctuation between the maximum and minimum values in the compression section after the initial rise and a degree of elastic recovery which is also minimal. This better result does not discard the embodiments that make use of one or no wall, and always with application of the forces transversal to the main axes of the cylindrical bodies, since they likewise demonstrate the required criteria as shown in the different graphs already commented.

Considered as included in the same invention is the use of stacking cylindrical bodies of whatever polygonal cross-section or curved cross-section, circular or elliptical, provided the stacking is regular and is limited between two bases, with no walls, or one or two, which are part of the same extruded piece.

The energy absorbing elements are obtained by extrusion in plastic of a single piece. This piece is formed by two continuous bases with no walls, or one or two, also continuous between which the core is defined. The application of a cut in a perpendicular or oblique direction results in the obtaining of energy absorbing individual elements.

The cut will follow a path in accordance with the configuration defined mainly by the cavity to be covered and in some or all of the sections the cut can be oblique.

The extrusion of a piece with these characteristics requires an extrusion die. The extrusion of pieces with different strengths requires the use of new dies with the high cost this supposes.

In the present invention use is made of foams to modify, essentially by scaling, the behaviour curve.

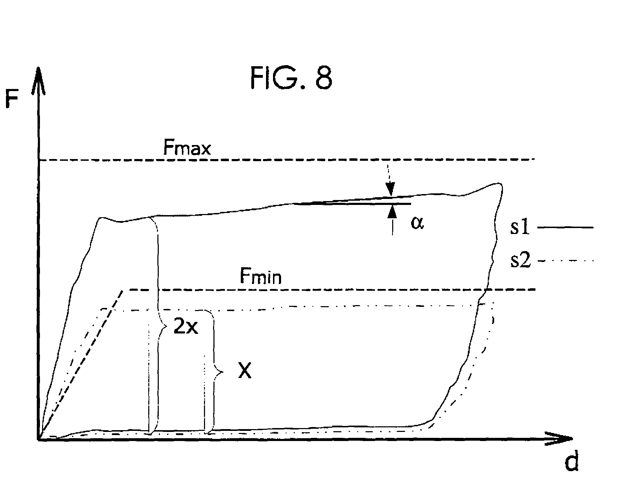

In figure 8 a first curve (s1) is shown which corresponds to an experiment carried out on an absorbing element without foam.

By means of a dashed curve the minimum value ($F_{min}$) is represented which is required for a certain application where this minimum value exceeds the value provided by the curve (s1).

A second curve (s2) represents the response of the absorbing element making use of foam and filling alternate rows. The incorporation of foam doubles the values of the force obtained since part of the walls of its cells have been stabilized against buckling.

A filling pattern in alternate rows signifies approximately 50% of the volume is occupied by foam (except for the cells adjacent to the bases).

This same volume can be filled using different patterns obtaining in response different values in the scaling factor of the curve and of variation in the gradient of the value of the force in its middle section (plateau gradient).

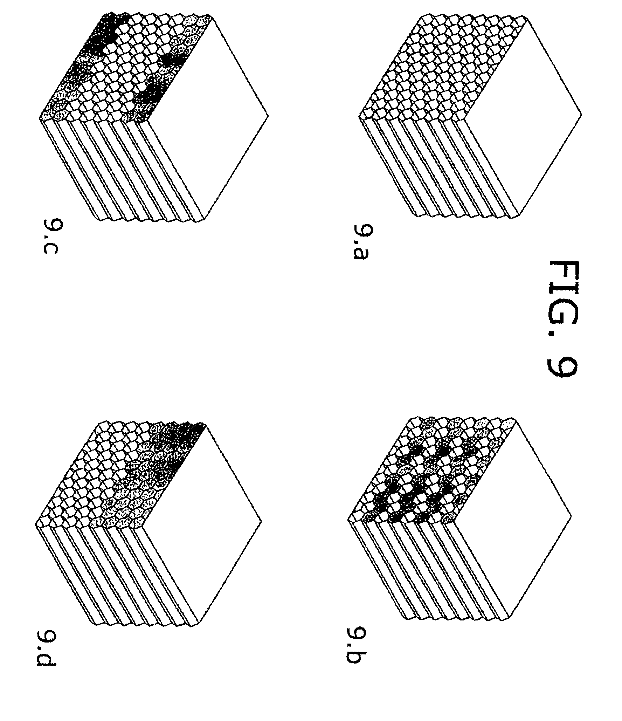

Figure 9 shows four different cases of patterns for filling the cells of the absorbing element with foam:

(a) absorbing element of an embodiment of the invention without foam in its cells,
(b) absorbing element with alternate rows of cells filled with foam,
(c) absorbing element with the rows of cells corresponding to the upper fourth of their volume and the lower fourth of their volume filled with foam,
(d) absorbing element with the rows of cells with the upper half of their volume filled with foam.

By way of example the following table reflects the values obtained in the scaling factor (f) and in the gradient (p) of the plateau or of the middle section for the different filling patterns considered in figure 9.

| Filling pattern | f | p |
|---|---|---|
| Without filling | x | 0° |
| Alternate rows | 2x | +5° |
| Rows filled in upper fourth and lower fourth | 4x | +10° |
| Filling in middle | 4.2x | +14° |

By changing the number of rows or cells filled with foam it is possible to adjust the scaling of the curve until this is located in the required ranges.

The increment in the gradient (p) need not be a negative factor since if the absorbing element without filler has a negative plateau gradient, the increment in the gradient on filling with foam results in a correction tending toward the horizontal and therefore it will allow a greater adaptation to the ideal curve defined by the value of $F_{max}$.

The essential nature of this invention is not altered by variations in materials, form, size and arrangement of the component elements, described in a non-restrictive manner, this being sufficient for an expert to proceed to the reproduction thereof.

## Claims

**1.** Energy absorbing element, of among the elements installable in the cavity of vehicle doors for the absorption of energy by impact by means of deformation **characterised in that** it is constituted by a honeycomb core formed by a regular stacking of cylindrical bodies of constant cross-section not closed on their ends, stacking limited by two bases, defined by means of planes or tangents to the cylindrical bodies with which it limits or secants to all or some of them according to the pattern used in the stacking, arranged one on each side of the core, where one of the bases is intended to rest on the unseen face of the door trim, and the opposite one, on that facing the unseen face of the door where the impact is received, the orientation of the axes of the cylindrical bodies of the core being parallel to the supporting bases, and both, bases supporting and axes of cylindrical bodies of the core, essentially perpendicular to the direction of the impact force.

2. Energy absorbing element according to claim 1 **characterised in that** one of its bases is constituted by a wall integrated in the core.

3. Energy absorbing element according to claim 1 **characterised in that** the bases are constituted by walls integrated in the core.

4. Energy absorbing element according to claim 1 **characterised in that** the core is configured by regular stacking of hollow cylindrical bodies of polyhedral cross-section.

5. Energy absorbing element according to claim 4 **characterised in that** the core is configured by stacking hollow cylindrical bodies of hexagonal cross-section in a honeycomb arrangement.

6. Energy absorbing element according to claim 1 **characterised in that** the core is configured by regular stacking of hollow cylindrical bodies of circular or elliptic cross-section.

7. Energy absorbing element according to claim 1 **characterised in that** some of the cavities of the core of the absorbing element are filled with foam.

8. Energy absorbing element according to claim 7 **characterised in that** it has the cavities filled with foam in alternate rows.

9. Energy absorbing element according to claim 7 **characterised in that** it has the rows of the core adjacent to one and the other base corresponding to a quarter of their volume with the cavities filled with foam.

10. Energy absorbing element according to claim 7 **characterised in that** it has the cavities filled with foam in half of the rows adjacent to one of the bases.

11. Energy absorbing element according to claim 7 **characterised in that** it has the cavities filled with foam in half of the intermediate rows.

12. Procedure for manufacturing the energy absorbing element according to the characteristics of the previous claims **characterised in that** it is obtained by extrusion in plastic of a single continuous piece starting from which the final configuration is obtained of each element by cutting according to a perpendicular or oblique cut of the walls.

13. Procedure for manufacturing the energy absorbing element according to claim 10 **characterised in that** when the absorbing element has been cut from the extruded continuous piece, part of its cavities are filled with foam following a predetermined pattern.

14. Procedure for manufacturing the energy absorbing element according to claim 10 **characterised in that** the cutting of the absorbing element is carried out by means of a die.

15. Procedure for manufacturing the energy absorbing element according to claim 10 **characterised in that** the cutting of the absorbing element is carried out by means of a laser.

16. Procedure for manufacturing the energy absorbing element according to claim 10 **characterised in that** the cutting of the absorbing element is carried out by means of a jet of water at very high pressure.

**Amended claims in accordance with Rule 86(2) EPC.**

**1.** Energy absorbing element, of among the elements installable in the cavity of vehicle doors for the absorption of energy by impact by means of deformation which is constituted by a honeycomb core formed by a stacking of cylindrical bodies **characterized in that** the stacking of the cylindrical bodies is a regular stacking, and said cylindrical bodies have a constant cross-section not closed on their ends, wherein the stacking is limited by two bases, defined by means of planes, tangents to the cylindrical bodies with which it limits or secants to all or some of them according to the pattern used in the stacking, arranged one on each side of the core, where one of the bases is intended to rest on the unseen face of the door trim, and the opposite one, on that facing the unseen face of the door where the impact is received, the orientation of the axes of the cylindrical bodies of the core being parallel to the supporting bases, and both, bases supporting and axes of cylindrical bodies of the core, essentially perpendicular to the direction of the impact force.

**2.** Energy absorbing element according to claim 1 **characterised in that** one of its bases is constituted by a wall integrated in the core.

**3.** Energy absorbing element according to claim 1 **characterised in that** the bases are constituted by walls integrated in the core.

**4.** Energy absorbing element according to claim 1 **characterised in that** the core is configured by regular stacking of hollow cylindrical bodies of polyhedral cross-section.

**5.** Energy absorbing element according to claim 4 **characterised in that** the core is configured by stacking hollow cylindrical bodies of hexagonal cross-section in a honeycomb arrangement.

**6.** Energy absorbing element according to claim 1 **characterised in that** the core is configured by regular stacking of hollow cylindrical bodies of circular or elliptic cross-section.

**7.** Energy absorbing element according to claim 1 **characterised in that** some of the cavities of the core of the absorbing element are filled with foam.

**8.** Energy absorbing element according to claim 7 **characterised in that** it has the cavities filled with foam in alternate rows.

**9.** Energy absorbing element according to claim 7 **characterised in that** it has the rows of the core adjacent to one and the other base corresponding to a quarter of their volume with the cavities filled with foam.

**10.** Energy absorbing element according to claim 7 **characterised in that** it has the cavities filled with foam in half of the rows adjacent to one of the bases.

**11.** Energy absorbing element according to claim 7 **characterised in that** it has the cavities filled with foam in half of the intermediate rows.

**12.** Procedure for manufacturing the energy absorbing element according to the characteristics of the previous claims **characterised in that** it is obtained by extrusion in plastic of a single continuous piece starting from which the final configuration is obtained of each element by cutting according to a perpendicular or oblique cut of the walls.

**13.** Procedure for manufacturing the energy absorbing element according to claim 10 **characterised in that** when the absorbing element has been cut from the extruded continuous piece, part of its cavities are filled with foam following a predetermined pattern.

**14.** Procedure for manufacturing the energy absorbing element according to claim 10 **characterised in that** the cutting of the absorbing element is carried out by means of a die.

**15.** Procedure for manufacturing the energy absorbing element according to claim 10 **characterised in that** the cutting of the absorbing element is carried out by means of a laser.

**16.** Procedure for manufacturing the energy absorbing element according to claim 10 **characterised in that** the cutting of the absorbing element is carried out by means of a jet of water at very high pressure.

# FIG. 1

FIG. 2

FIG. 3

FIG. 4

FIG. 5

FIG. 6

FIG. 7

FIG. 8

FIG. 9

9.a

9.b

9.c

9.d

**European Patent Office**

## EUROPEAN SEARCH REPORT

Application Number

EP 04 38 1011

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 197 09 171 C (YMOS AG IND PRODUKTE) 4 June 1998 (1998-06-04) * the whole document * | 1,2,6,7 | F16F7/12 B60R21/04 |
| Y | EP 0 816 179 A (YMOS AG IND PRODUKTE) 7 January 1998 (1998-01-07) | 1 | |
| A | * the whole document * | 2,3,6,7 | |
| Y | EP 0 530 042 A (TORAY INDUSTRIES) 3 March 1993 (1993-03-03) | 1 | |
| A | * column 4, line 28 - column 5, line 54; figures 1-4 * | 12 | |
| A | DE 197 16 223 C (YMOS AG IND PRODUKTE) 19 November 1998 (1998-11-19) * the whole document * | 1-3,6-11 | |
| A | US 6 117 520 A (WIELINGA HENK ET AL) 12 September 2000 (2000-09-12) * the whole document * | 1,4,6 | |

TECHNICAL FIELDS SEARCHED (Int.Cl.7)

F16F
B60J
B60R

The present search report has been drawn up for all claims

| Place of search | Date of completion of the search | Examiner |
|---|---|---|
| Munich | 14 January 2005 | Prussen, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 38 1011

This annex lists the patent family members relating to the patent documents cited in  the above-mentioned European search report.
The members are as contained in the European Patent Office EDP file on
The European Patent Office is in no way liable for these particulars which are merely  given for the purpose of information.

14-01-2005

| Patent document cited in search report | | Publication date | Patent family member(s) | | Publication date |
|---|---|---|---|---|---|
| DE 19709171 | C | 04-06-1998 | DE | 19709171 C1 | 04-06-1998 |
| | | | EP | 0864467 A2 | 16-09-1998 |
| EP 0816179 | A | 07-01-1998 | DE | 19625457 A1 | 15-01-1998 |
| | | | EP | 0816179 A2 | 07-01-1998 |
| EP 0530042 | A | 03-03-1993 | JP | 5330341 A | 14-12-1993 |
| | | | JP | 5305880 A | 19-11-1993 |
| | | | CA | 2076717 A1 | 01-03-1993 |
| | | | DE | 69211254 D1 | 11-07-1996 |
| | | | DE | 69211254 T2 | 31-10-1996 |
| | | | EP | 0530042 A1 | 03-03-1993 |
| | | | KR | 9703595 B1 | 20-03-1997 |
| | | | US | 5435619 A | 25-07-1995 |
| | | | US | 5306068 A | 26-04-1994 |
| DE 19716223 | C | 19-11-1998 | DE | 19716223 C1 | 19-11-1998 |
| US 6117520 | A | 12-09-2000 | SE | 506549 C2 | 12-01-1998 |
| | | | AT | 242691 T | 15-06-2003 |
| | | | DE | 69628658 D1 | 17-07-2003 |
| | | | DE | 69628658 T2 | 29-04-2004 |
| | | | EP | 0861151 A1 | 02-09-1998 |
| | | | SE | 9503134 A | 12-03-1997 |
| | | | WO | 9710098 A1 | 20-03-1997 |

EPO FORM P0459

For more details about this annex : see Official Journal of the European Patent Office, No. 12/82